Europäisches Patentamt

European Patent Office

Office européen des brevets

(11) Publication number: **0 088 351**
**A1**

## (12) EUROPEAN PATENT APPLICATION

(21) Application number: **83102020.1**

(22) Date of filing: **02.03.83**

(51) Int. Cl.³: **A 47 J 43/04,** A 23 G 9/12, A 23 G 9/30, A 47 J 27/14

(30) Priority: **09.03.82 IT 2003282**

(43) Date of publication of application: **14.09.83**
**Bulletin 83/37**

(84) Designated Contracting States: **DE FR GB**

(71) Applicant: Firm: **ALBERTO CIPELLETTI, via Emilia, I-20070 Guardamiglio (Milan) (IT)**

(72) Inventor: **Cipelletti, Alberto, Via Emilia, I-20070 Guardamiglio (IT)**

(74) Representative: **Marietti, Giuseppe, CENTRO DI CONSULENZA IN PROPRIETA' INDUSTRIALE viale Caldara, 43, I-20122 Milano (IT)**

(54) Multifunctional electrical apparatus.

(57) The present invention concerns a multifunctional electrical apparatus for the preparation of food, particularly for cooking and/or refrigerating, while simultaneously mixing and/or homogenizing, foodstuffs. Said apparatus is characterized in that it comprises, in combination: a refrigerating unit (5), the refrigerating coil (4) of which is in thermal exchange conditions with a container (2) having a circular section and a vertical axis, formed or adapted to be introduced into the body of the electrical apparatus, replaceable means to mix, to homogenize or to otherwise treat the contents of said container, possible means (11) to heat said container and its contents, and means to control the operations of cooling, mixing, heating or the like.

The main advantage of the electrical apparatus according to the invention lies in the possibility to perform a series of functions and, therefore, to offer many possibilities of use, to allow thorough exploitation of its motor means and to have reduced dimensions such as to allow the same to be embedded into a piece of furniture.

The present invention concerns a multifunctional
_ _ _   electrical apparatus for the preparation of
food, particularly for cooking and/or refrigerating whi-
le simultaneously mixing and/or homogenizing, foodstuffs.

Electrical apparatuses for the preparation of ice-
cream, which cool and simultaneously mix the mixture to
be freezed, are known, as well as electrical apparatuses
to cook and simultaneously mix foodstuffs; said apparatuses,
however, have the inconvenience that each of them performs
only one of these functions. This inconvenience, that considerably limits the opportunities of use of said known
electrical apparatuses, has to be added to an extremely
low exploiation coefficient of its motor means. Moreover
said known _ _ _ _   electrical apparatuses, usually heavy
and cumbersome, have no possibility to be integrated into
the kitchen furniture, for instance by embedding them into
a piece of furniture, and they create considerable problems
due to their sizes both when they have to be used and
when they must be put away.

These drawbacks are particularly felt by the purchasers who  very often consider said household electrical
apparatuses as too high and even injustified an expenditure
considering the fact that said drawbacks make them to be
scarcely used.

An  object of the present invention, therefore, is
to foresee a new type of multifunctional electrical apparatus as hereinabove defined, extremely compact and suitable to be integrated into a kitchen furniture, for example suitable to be embedded into a piece of furniture, which eliminates the drawbacks of the previously known electrical apparatuses, in particular the inconvenience of an insufficient possibility of use of same and of its motor means, to eliminate the widely spread idea that they are expensive objects with poor possibilities of use.

Another object of the present invention is to propose an - - - electrical apparatus which, besides cooling and cooking food while simultaneously mixing and homogenizing it, also allows to perform all those operations to which foodstuffs are generally submitted, such as grating, mincing, cutting, squeezing, mixing, etc.

Said objects are achieved by means of an electrical apparatus characterized in that it comprises in combinations a refrigerating unit, the refrigerating coil of which is in conditions of thermal exchange with a container having a circular section and a vertical axis, formed or adapted to be introduced into the body of the electrical apparatus, replaceable means to mix, to homogenize or to otherwise treat the contents of said container and means to control the functions of cooling, mixing or the like. The electrical apparatus is, moreover, characterized in that it comprises means to heat said container and its contents, and means to control the functions of heating mixing or the like. Furthermore, still according to the invention, the electric motor of the apparatus is connected to a power take-off provided with a clutch on which it is possible to engage the heads of devices such as meat chopper, grater, fruit squeezer, mixer or others ones. Still in order to thoroughly use all
the mechanical and electrical components of said  - - -
electrical apparatus, a shunt of the refrigerating coil
is provided, through which it is possible to feed, when the
apparatus is not in use, one or more services requiring cold
supply.

   In fact, due to its configuration and size, the proposed
- - -     electrical apparatus is particularly suitable to be
embedded into a piece of kitchen furniture, with the possibi-
bility of connecting its refrigeration unit to a plate placed in a  thermally insulated space provided in the furniture
itself  where the electrical apparatus is embedded, and using
it to refrigerate said space.

   Finally, according to an advantageous feature  of the electri
cal apparatus according to the invention the container having a vertical
axis is removable  in order to facilitate at most the removal of the treated
product as well as the cleaning of the container itself.


- Figure  1 is a schematic  perspective view of an
electrical apparatus according to the invention, with its
main mechanical and electrical components illustrated by
dash lines.
- Figures 2, 3, 4 are front partially cross views of as many
embodiments of the electrical apparatus.


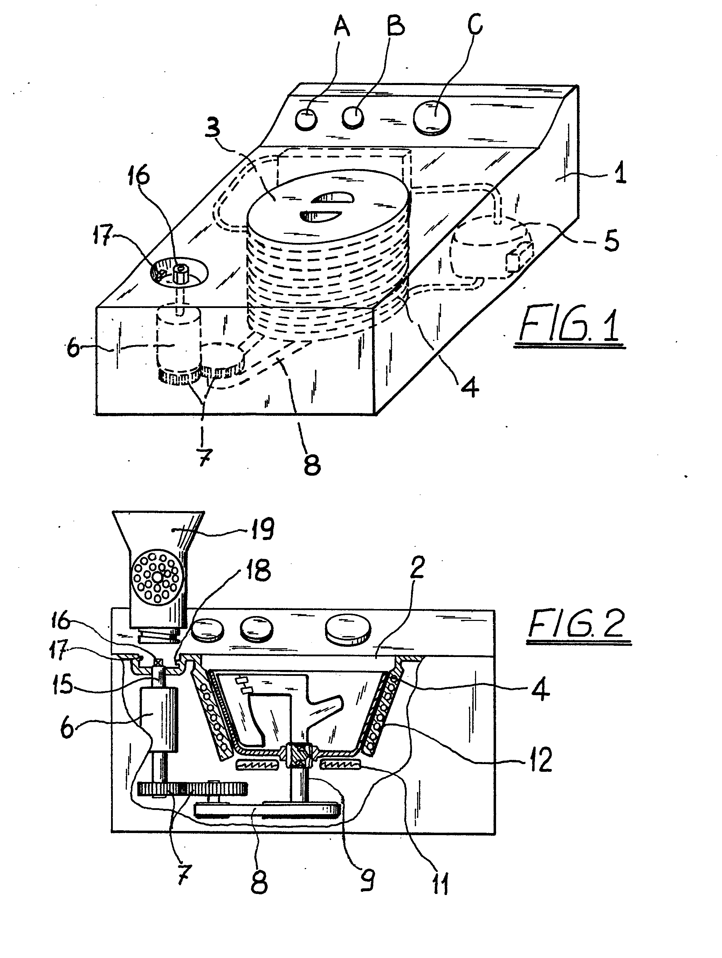

   First of all with reference to figures 1 and 2, the electrical apparatus comprises a body 1 on the top surface
of which a tank 2 is provided, which can be closed by means
of a lid 3, said tank 2 being in conditions of thermal
excange with coils 4 of a refrigerating unit generally indicated by 5.

An electrical motor 6 controls, by means of driving gears, for example consisting of a couple of gears 7, and a driving belt 8, the rotation of a shaft 9 connected to blades 10 for mixing, homogenizing or the like, which blades can be of an articulated type.

The tank 2 can house a container made of metal 12 provided on its bottom with an idle sealingly mounted hub 13, the external part of which, thanks to a clutch 14, can bear the shaft 9, controlling the rotations of mixer blades 10 while its internal part can receive the shaft of the mixer blades 10.

The lower part of the tank 2 bears, in conditions of thermal exchange with the tank itself, electrical resistors 11 capable of heating the removable container 12 and its contents.

The top end 15 of the electrical motor shaft is connected to a power take-off 16 housed in a niche 17 provided in the top surface of the - - - electrical apparatus* body 1 said niche 17 being provided with a clutch, for instance a bayonet joint 18, capable of fixing in an interchangeable way the head of a device 19 which can be a meat chopper, a mixer, a fruit squeezer or any other similar device for the pretreatment of foodstuffs. Of course, said devices 19 for pre-treating foodstuffs instead of being actuated by a power take-off placed on the surface of the electrical apparatus, can be operated directly by the shaft 9 controlling the mixer rotations. For this purpose, mechanical or electrical devices are provided, capable of increasing the rotation speed of the shaft 9 up to the values required by said pre-treatments.

Figure 3 illustrates another embodiment of the electrical apparatus according to the present invention, in*
which the shaft 22 controlling the rotations of mixer 10 cannot
be removed and is provided, on its top end, with a clutch
21 on which the mixer 10 can be fixed in an interchangeable
way. In this case, the tank 2 can house a container made
of metal 23, the external surface of which covers the walls
of thank 2 as well as the shaft 22, the surface covering the
shaft 22 being provided with a hole through which the
21 comes out. This configuration of the apparatus illustrates another possible position of the heating means for the
container 23, in the form of the electrical resistors 20
placed in conditions of thermal exchange around the side walls
of the tank 2, in the same way as the coil 4 of the refri-
gerating unit. In this embodiment, the tank 2 is closed on
the bottom and therefore constitutes in itself a container
specially suitable for treating substances to be cooled,
while the container 23 is more suitably designed for heating.
Of course, different mixers 10 for the containers 2 and 23
will be provided for.

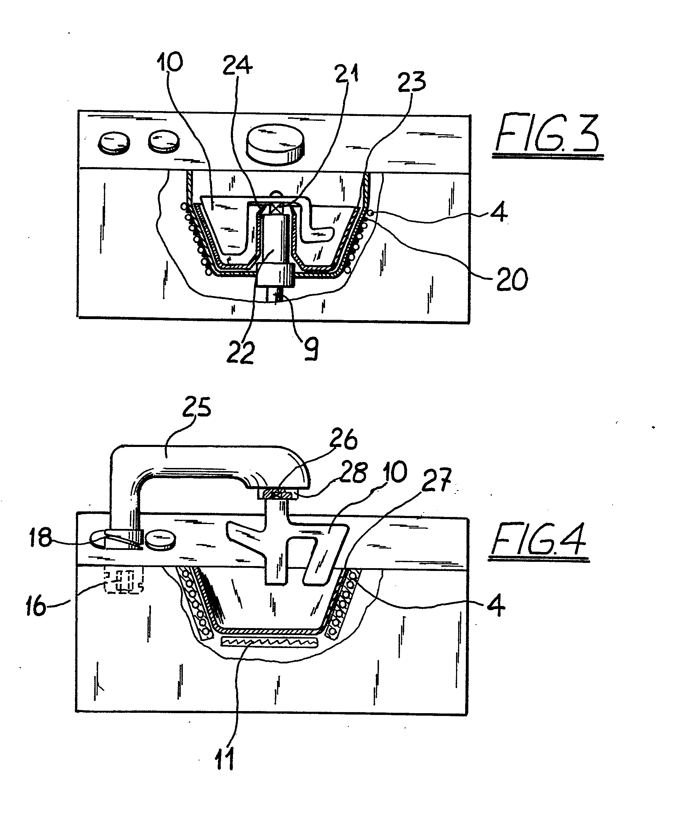

Figure 4 illustrates a third embodiment of the electrical apparatus according to the present invention, in which
the rotations of mixer 10 are controlled from the outside
by means of an arm 24 provided with a head designed to be
fixed in a removable way to the clutch 16. The mixer 10 is
fixed, by means of a clutch 26 and in an interchangeable
way, to a shaft 28 integral to the arm 25 and bearing the
mixer 18. The tank 2 can receive a container 27 made of metal
which covers the internal walls of the tank itself.

The electrical apparatus according to the present invention is furthermore provided with devices control-
ling and actuating the operations of heating and cooking,

refrigerating and mixing, homogenizing and the like. In paticular, figure 1 indicates by A a device for controlling and regulating the intensity and duration of refrigeration, by B a device for controlling and regulating the intensity and duration of heating or cooking and by C a device for controlling and regulating · the rotation speed of the stirring means and the duration of mixing and homogeinizing operations.

So it is possible to perform many recipes involving heating and/or cooling of foodstuffs, including the prepara tion of ice-cream, eventually preceded by pasteurization of the mixture.

The embodiments of the present invention have been described as mere examples and can undergo to many variations or changes. For example, the heating of the container and its contents can be performed by reversing the refrigerating cycle, the apparatus can be embedded into a piece of furniture, and in particular a kitchen furniture, cooling can be performed by means of an external refrigerating unit, for example by connecting the refrigerating coil to the refrigerating unit of a usual refrigerator, the refrigerating unit of the apparatus can be used to supply with cold one or more external services and in particular, when the apparatus is embedded into a piece of furniture, the refrigerating unit can be connected, through a valve, to a cooler placed in a space provided in the furniture itself, for instance below the electrical apparatus. In the latter case, the thermal insulation between the electrical apparatus and the space below can be obtained by means of an element made of insulating material, for instance foamed polyurethane, which completely covers the embedded part of the electrical apparatus, filling the space existing between the latter and the furniture walls, said element being eventually constituted by the packing material of the electrical apparatus itself.

CLAIMS

1. A multifunctional electrical apparatus for si
multaneously thermally treating and mixing and or
homogenising foodstuffs, characterized in that it
comprises, in combination: a refrigerating unit, the
refrigerating coil of which is in conditions of
thermal exchange with a container having a circular
section and a vertical axis, formed or adapted to be
introduced into the body of the electrical apparatus,
replaceable means for mixing, homogenizing or performing
other operations on the contents of said container,
and means to control the functions of cooling, mixing
or the like.

2. An electrical apparatus according to claim 1,
characterized in that it further comprises means to heat
said container and its contents and means to control the
functions of heating, mixing and the like.

3. An electrical apparatus according to claim 2,
wherein said means to heat the container and its contents
are electrical resistors placed in conditions of thermal
exchange with the bottom and or the walls of the container
itself.

4. An electrical apparatus according to claim 2,
wherein said means to heat the container and its contents
comprise said refrigerating coil and one or more valves
to actuate a reversal of the refrigerating cycle to use
the heat produced by the compression work for heating
said container.

5. An electrical apparatus according to claim 1, wherein said container can be removed from the body of the apparatus.

6. An electrical apparatus according to claim 1, wherein said container is fixed in the body of the electrical apparatus and can house a second container, and wherein said second container has an external surface which adheres to the internal surface of the fixed container.

7. An electrical apparatus according to claim 5, wherein said removable container presents on its bottom a hole wherein an idle hub is sealingly mounted, said hub being connected with a driving gear controlling the rotatory movement and with mixing or homogenizing means consisting of blades mounted on an interchangeable shaft.

8. An electrical apparatus according to claim 6, wherein said fixed container bears a central shaft to which blades for mixing and or homogenizing can be fixed in an interchangeable way, and wherein said second container has a central bush covering said shaft.

9. An electrical apparatus according to claim 1, wherein the electrical motor thereof can be connected to a power take-off housed in a niche provided on one of its external surfaces, said niche being provided with a clutch for engagement with the heads of separate devices for chopping, grating, mixing or the like.

- 3 -    0088351

10. An electrical apparatus accoding to claim 9, wherein said power take-off can be connected to an arm to transmit the rotatory movement to a mixer or homogenizer fixed in an interchangeable way to the arm itself and acting on the contents of said container.

11. An electrical apparatus according to claim 1, characterized in that it is in the form of an ebloc group which can be inserted into a piece of kitchen furniture, and wherein the top horizontal surface of said group can be used as working plane when the appa ratus is not in operation.

12. An electrical apparatus according to claim 11, wherein at least a shunt of the refrigerating coil in said refrigerating unit is provided for, to feed with cold a static or ventilated cooler placed in conditions of thermal exchange in a space of said piece of furniture housing said electrical apparatus.

*FIG.1*

*FIG.2*

0088351

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 077 128 (CAVALLI) <br><br> * Whole document * | 1,2,3, 5,7,9 | A 47 J 43/04<br>A 23 G 9/12<br>A 23 G 9/30<br>A 47 J 27/14 |
| X | FR-A-1 024 471 (BROWN BOVERIE) <br><br> * Whole document * | 1,9,11 ,12 | |
| X | FR-A- 978 237 (CAVALLERI)<br>* Whole document * | 1,2 | |
| X | FR-A-1 023 909 (BROWN BOVERI) <br><br> * Whole document * | 1,11, 12 | |
| A | DE-A-2 512 524 (WIETZEL)<br>* Whole document * | 1,2 | **TECHNICAL FIELDS SEARCHED (Int. Cl. 3)** |
| A | FR-A-2 208 629 (BRATLAND)<br>* Whole document * | 1,2 | A 47 J<br>A 23 G<br>B 01 F<br>F 25 C |
| A | DE-C- 800 300 (PILZ) <br><br> * Whole document * | 4,11, 12 | |
| A | FR-A-2 217 645 (MK REF. LTD)<br>* Whole document * | 4 | |
| | --- -/- | | |

| The present search report has been drawn up for all claims | | |
|---|---|---|
| Place of search<br>THE HAGUE | Date of completion of the search<br>13-06-1983 | Examiner<br>SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl. ³) |
|----------|-----------------------------------------------------------|--------------------|-------------------------------------|
| A | DE-A-1 601 085  (MUSSO)<br>* Figure 1 *<br><br>--- | 9,10 | |
| A | GB-A- 873 685  (KENWOOD)<br>* Figure 1-3 *<br><br>--- | 9,10 | |
| A | FR-A-1 382 836  (ROTEL A.G.)<br>* Figures 1-4 *<br><br>----- | 8 | |
| | | | TECHNICAL FIELDS SEARCHED (Int. Cl. ³) |

The present search report has been drawn up for all claims

| Place of search<br>THE HAGUE | Date of completion of the search<br>13-06-1983 | Examiner<br>SCHARTZ J. |
|------------------|--------------------|-------------|